# EUROPEAN PATENT SPECIFICATION

(11) **EP 0 576 686 B1**
(45) Date of publication and mention of the grant of the patent: **10.10.2001**
(21) Application number: 93902505.2
(22) Date of filing: 20.01.1993
(51) Int. Cl.: H01M 10/40, H01M 4/02, H01M 6/18, C08G 65/32

(54) **CELL**
ZELLE
PILE

(30) Priority: 21.01.1992 JP 3145192
(43) Date of publication of application: 05.01.1994
(73) Proprietor: DAI-ICHI KOGYO SEIYAKU CO., LTD., Shimogyo-ku Kyoto 600 (JP); YUASA CORPORATION, Takatsuki-shi, Osaka 569 (JP)
(72) Inventor: KONO, Michiyuki, Neyagawa-shi, Osaka 572 (JP); MORI, Shigeo, Kyoto-shi, Kyoto 615 (JP); TAKEDA, Kazunari, Takatsuki-shi, Osaka 569 (JP); IZUTI, Shyuiti, Koga-gun, Shiga 520-33 (JP)
(74) Representative: Seaborn, George Stephen
(86) International application number: PCT/JP93/00064
(87) International publication number: WO 93/14529

(56) References cited:
- EP-A- 0 318 161
- EP-A- 0 460 876
- EP-A- 0 537 930
- JP-A- 1 169 807
- JP-A- 63 094 563
- JP-A- 63 164 176
- US-A- 4 908 283
- US-A- 4 925 751
- PATENT ABSTRACTS OF JAPAN vol. 15, no. 425 (C-0879) 29 October 1991 & JP-A-03 177 409 (NIPPON OIL CO. LTD.)
- PATENT ABSTRACTS OF JAPAN vol. 12, no. 452 (E-687) 28 November 1988 & JP-A-63 181 259 (UBE INDUSTRIES LTD.)
- PATENT ABSTRACTS OF JAPAN vol. 13, no. 444 (E-828) 5 October 1989 & JP-A-01 169 873 (UBE INDUSTRIES LTD.)
- PATENT ABSTRACTS OF JAPAN vol. 13, no. 444 (E-828) 5 October 1989 & JP-A-01 169 875 (UBE INDUSTRIES LTD.)
- PATENT ABSTRACTS OF JAPAN vol. 16, no. 22 (E-1156) 20 January 1992 & JP-A-03 238 771 (TOYO INK MANUFACTORING CO. LTD.)
- PATENT ABSTRACTS OF JAPAN vol. 16, no. 207 (C-0941) 18 May 1992 & JP-A-04 036 347 (DAI ICHI KOGYO CO.)
- PATENT ABSTRACTS OF JAPAN vol. 15, no. 440 (C-0883) 11 November 1991 & JP-A-03 188 115 (YUASA BATTERYCO. LTD.)
- PATENT ABSTRACTS OF JAPAN vol. 15, no. 353 (C-0865) 6 September 1991 & JP-A-03 139 552 (UBE INDUSTRIES LTD.)

## Description

### TECHNICAL FIELD

The present invention relates to a galvanic cell comprising a solid polymer electrolyte of high ionic conductivity.

### BACKGROUND OF THE INVENTION

Recent tendencies in microelectronics require a smaller, lighter and thinner galvanic cells having a high energy density for inclusion in electronic devices and integration with electronic elements and circuits for example as memory back-up power sources for electronic devices. Small light galvanic cells such as lithium cells have been already used in practice as primary cells. The fields of application of such cells are restricted. However, secondary galvanic cells using nonaqueous electrolytic solution enabling a reduction in size and weight have been proposed as a replacement for conventional lead cells and nickel-cadmium cells. However, no galvanic cell satisfying practical requirements, such as cycle characteristics and self-discharge characteristics of electrode active material, has hitherto been known.

The present inventors have investigated the preparation of a thin galvanic cell, specifically a sheet cell having a thickness of 100 to 500 *µ*m which is small and light and has a high energy density, using a thin membrane of an ionic conductive polymer. When a thin membrane of ionic conductive polymer is used problems arise, specifically the preparation of a thin membrane of metallic lithium having a quantity fully matching the membrane of ionic conductive polymer is technically difficult and accordingly manufacture of the galvanic cell becomes complex. In addition, when such a cell is used as a secondary galvanic cell, the use of metallic lithium is restricted because of the difficulties such as formation of lithium dendrite and passivation of the surface.

Lithium metal-containing alloys such as lithium-aluminium, lithium-lead and lithium-tin alloys have been extensively investigated. However these alloys are low in strength and hence the electrode is cracked or pulverized by repeated charge and discharge.

Selection of the electrolyte salts and improvements of the separator have been tried for preventing formation of lithium dendrite. For the purpose of preventing formation of lithium dendrite non-woven polypropylene fabrics have been laminated with non-woven glass fiber fabrics, conventionally used as separators, but to no substantial effect.

In many research laboratories, intercalation or doping phenomenon of layer compounds have been especially investigated with a view to producing satisfactory electrode active material. Such treated layer compounds theoretically cause no complex chemical reaction during the electrochemical reaction of charge and discharge and accordingly an excellent charge-discharge cycle performance can be expected.

A liquid electrolyte, particularly an organic electrolytic solution containing dissolved ionic compound has been generally used as electrolyte for galvanic cells utilizing electrochemical reaction and other electrochemical devices such as electric double layer capacitors and electrochromic elements. However, such a liquid electrolyte tends to leak liquid from the parts and to cause elution and evaporation of electrode material and hence problems, including lack of long-term reliability and scattering of the electrolytic solution during the sealing process, arise.

In order to improve liquid leakage resistance and the storage stability, it is necessary to use an ionic conductive polymer having ionic conductivity, that is a solid electrolyte. However, when conventional ionic conductive polymers are used, there may be problems including complex processes of manufacturing the galvanic cell and the fact that use of metallic lithium is restricted as mentioned above. Thus, it has been difficult to provide a small light cell which has good long-term reliability and safety and also has a high performance and a high energy density.

For example, the known solid electrolytes include a solid polymer electrolyte manufactured from a combination of a high polymer having a terminal acryloyl-modified alkylene oxide chain, a low molecular alkylene oxide copolymer, polyvinyl chloride and an electrolyte salt (Japanese Laid-Open Patent Publication No. 177409 of 1991) and a solid electrolyte manufactured from a combination of a terminal acryloyl-modified alkylene oxide chain, an inorganic ionic salt and an organic solvent such as propylene carbonate (Japanese Laid-Open Patent Publication No. 94501 of 1988). However, these electrolytes had problems in volume and mechanical strength, and a small light cell having a high energy density could not be prepared with such electrolytes.

An object of the present invention is to provide a galvanic cell which has excellent long-term reliability and safety and also has a high performance and a high energy density though small and free of liquid leakage.

### DISCLOSURE OF THE INVENTION

The present inventors have carried out investigations to solve the above problems. The inventors found that a solid electrolyte which is excellent in mechanical strength and has an electric conductivity comparable with conventional electrolytes and also shows no bleed-out of solvent can be prepared by providing a terminal acryloyl-modified alkylene oxide polymer having an alkylene oxide polymer chain comprising not less than a definite number of monomer units as the polymer electrolyte, adding a solvent and a electrolyte in a specific ratio, and then crosslinking the polymer by irradiation and/or by heating. The inventors further found that a highly efficient galvanic cell can be prepared using such a solid electrolyte.

In accordance with the present invention, there is provided a galvanic cell comprising a composite positive electrode and a negative electrode separated by a solid electrolyte, characterised in that:
the solid electrode is prepared by dissolving a polymer in a solvent together with an electrolyte salt and crosslinking the polymer in the solution by irradiation and/or by heating to yield the polymer in solidified form and containing the electrolyte salt and the solvent;
said polymer is a terminal acryloyl-modified alkylene oxide polymer of the following formula: 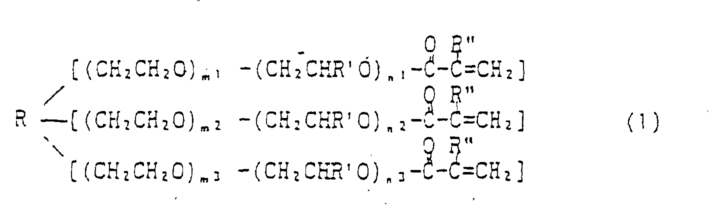 in which R is glycerol or trimethylolpropane residue, R' is an alkyl group having 1 to 6 carbon atoms, R" is hydrogen or methyl group, and m¹, m², m³, n¹, n², and n³ are respectively 0 or an integer equal to at least 1 and the value of each of (m¹ + n¹), (m³ + n²) and (m³ + n³) ≥ 35, the solvent is selected from ethylene carbonate, propylene carbonate, τ-butyrolactone, dimethoxyethane, dimetholsulfoxide, dioxolane, sulfolane and water, and the amount of said solvent is 220 to 950 weight % based on said terminal acryloyl-modified alkylene oxide polymer; and the composite positive electrode is prepared by mixing a terminal acryloyl-modified alkylene oxide polymer in accordance with Formula (1), an electrolyte salt, a solvent selected from ethylene carbonate, propylene carbonate, τ-butyrolactone, dimethoxyethane, dimethylsulfoxide, dioxolane, sulfolane and water and a positive electrode active material and crosslinking the polymer in the mixture by irradiation and/or heating to yield the polymer in solidified form and containing the electrolyte salt and the solvent.

The invention enables the surface area of the active material in contact with the electrolyte layer or separator and a current collector to be increased. Thus a highly efficient electrode having an improved cycle characteristic can be obtained.

The solid electrolyte of a cell according to the invention is an ionic conductive polymer. The solid electrolyte causes the formation of lithium dendrite near the negative electrode to be prevented and provided a separator having excellent mechanical strength and which is stable both thermally and electrochemically.

The terminal acryloyl-modified alkylene oxide polymer may be prepared by a procedure in which a compound having three active hydrogens such as glycerol or trimethylolpropane is polymerized with an alkylene oxide by ring-opening and the resultant alkylene oxide polymer is esterified with an unsaturated organic acid such as acrylic acid or methacrylic acid or subjected to a dehydrochlorinating reaction with an acid chloride such as acrylic chloride or methacrylic chloride. The terminal acryloyl-modified alkylene oxide polymer is typically represented by the following formula (2): 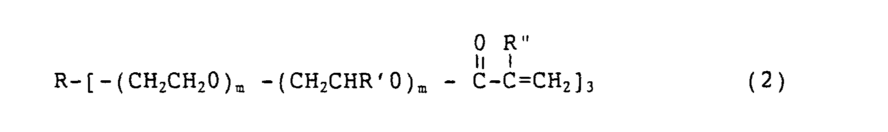 where R is a residue of a starting material, R' is an alkyl group having 1 to 6 carbon atoms, R" is hydrogen or methyl group and m and n are respectively 0 or an integer which is at least 1 and m + n ≥ 35.

The alkylene oxides used for the synthesis of the alkylene oxide polymer include, for example, ethylene oxide, propylene oxide, butylene oxide and 1,2-epoxyhexane, 1,2-epoxyoctane. Particularly preferred are ethylene oxide, propylene oxide and butylene oxide. The number of monomer units (monomer unit number) is required to be not less than 35 per functional polymer chain of the alkylene oxide polymer, that is, per polyalkylene oxide chain.

If the monomer unit number is less than 35, it is difficult to crosslink by mixing the solvent in the terminal acryloyl-modified alkylene oxide polymer in an amount not less than 220 weight % based on the polymer and thus the mechanical property is poor and bleed-out of the solvent to the surface of the crosslinked product is marked.

The solvent used for the solid electrolyte of the galvanic cell of the present invention preferably is compatible with the terminal acryloyl-modified alkylene oxide polymer. The solvent is at least one solvent selected from ethylene carbonate, propylene carbonate, γ-butyrolactone, dimethoxyethane, dimethylsulfoxide, dioxolane, sulfolane and water.

The ratio of the solvent to the terminal acryloyl-modified alkylene oxide polymer is 220 to 950 weight %. If this ratio is lower than 220 weight %, the conductivity of the resultant solid electrolyte is low. When the ratio exceeds 950 weight %, the mechanical strength of the impregnated product is markedly lowered.

The electrolyte salt used for the solid electrolyte of the galvanic cell of the present invention is preferably at least one salt selected from lithium fluoride, lithium chloride, lithium bromide, lithium iodide, lithium nitrate, lithium thiocyanate, lithium perchlorate, lithium trifluoromethanesulfonate, lithium tetrafluoroborate, lithium bistrifluoromethylsulfonylamide, lithium tristrifluoromethylsulfonylmethide, sodium thiocyanate, sodium perchlorate, sodium trifluoromethanesulfonate, sodium tetrafluoroborate, potassium thiocyanate, potassium perchlorate, potassium trifluoromethanesulfonate, potassium tetrafluoroborate, magnesium thiocyanate, magnesium perchlorate and magnesium trifluoromethanesulfonate. The amount of the electrolyte salt is preferably 1 to 30 weight % based on said solvent.

The solid electrolyte used in the galvanic cell of the present invention can be prepared by a procedure in which a uniform liquid mixture containing the terminal acryloyl-modified alkylene oxide polymer, the electrolyte salt and the solvent is uniformly coated on a substrate by a knife coater, a gravure coater or a spin coater and then crosslinked by irradiation of high energy electromagnetic wave such as ultraviolet radiation, visible light or electron ray or by heating. The liquid mixture may be prepared by a procedure in which the solvent previously containing dissolved electrolyte salt is mixed uniformly with the terminal acryloyl-modified alkylene oxide polymer or by a procedure in which the solvent is mixed uniformly with the terminal acryloyl-modified alkylene oxide polymer and then the electrolyte salt is dissolved.

To the liquid mixture, if required, a photopolymerization initiator such as trimethylsilylbenzophenone, benzoin, 2-methylbenzoin, 4-methoxybenzophenone, benzoin methyl ether or anthraquinone; and a polymerization initiator such as benzoyl peroxide or methy ethyl ketone peroxide may be added.

As mentioned above, the composite electrode is formed by being united with the electrode active material. It is preferred that the uniform liquid mixture (solid electrolyte composition) containing the terminal acryloyl-modified alkylene oxide polymer, the electrolyte salt and the solvent is mixed with the electrode active material and the polymer is crosslinked by irradiation and/or by heating. In the procedure, carbons such as graphite, carbon black and acetylene black and electron conductive substances such as metal powders and conductive metal oxides may be also used together.

The ratio of the solid electrolyte to the electrode active material can be selected according to the electrode active material. For example, it is preferred in a galvanic cell utilizing intercalation of a layer compound, bear the point where the ionic conductivity of the electrolyte becomes to be maximum. Also in a galvanic cell utilizing the doping phenomenon, it is required that the ion concentration in the electrolyte follows the change by charge and discharge.

In the galvanic cell of the present invention, it is preferred that the solid electrolyte composition (or a mixture thereof with an electrode active material) is coated on the surface of the electrode material and crosslinked to form a uniform solid electrolyte layer (or a composite electrode) on the electrode surface. Any known coating means such as roll coating, doctor blade coating, spin coating, bar coating and cast coating can be applied.

Among the positive electrode active materials used in the composite positive electrode, there are included the following cell electrode materials, group I metal compounds, e.g., CuO, Cu₂O, Ag₂O, CuS and CuSO₄; group IV metal compounds, e.g., TiS₂, SiO₂ and SnO; group V metal compounds, e.g., V₂O₅, V₆O₁₂, VOₓ, Nb₂O₅, Bi₂O₃ and Sb₂O₃; group VI metal compounds, e.g., CrO₃, Cr₂O₃, MoO₃, WO₃ and SeO₂; group VII metal compounds, e.g., MnO₂ and Mn₂O₃; group VIII metal compounds, e.g., Fe₂O₃, FeO, Fe₃O₄, Ni₂O₃, NiO, CoO₃ and CoO; metal compounds, e.g., lithium-cobalt composite oxides and lithium-manganese composite oxides represented by the general formulae: Liₓ MX₂ and Kiₓ MN_{y} X₂, where M and N are respectively a metal of group I to group VIII and X is a chalcogen element such as oxygen and sulphur ; and conductive high molecular compounds and carbonaceous materials of pseudographite structure e.g., polypyrrole, polyaniline, polyparaphenylene, polyacetylene and polyacene.

Generally used as negative electrode active materials in the negative electrode of the galvanic cell of the present invention are lithium metal and lithium metal-containing alloys such as lithium-aluminium alloy, lithium-lead, lithium-tin, lithium-aluminium-tin, lithium-gallium and Wood's metal. Alkali metals such as sodium metal and their alloys and conductive polymers capable of cationic doping such as polyacetylene and polythiophene can also be used. Such materials and metals can be used alone or in combinations of at least two.

As the negative electrode active materials which is mixed with the solid electrolyte composition and cured to form the composite negative electrode, there may be used those exemplified as the negative electrode active material used in the negative electrode and carbonaceous materials such as carbon. Of course, they are not restricted to them and they can be used each or in combinations of at least two. It is preferred that said carbonaceous material is a carbon powder (average particle size: not less than 15*µ*m) which is analyzed to be:
- Lattice spacing (d002):: 3.35 to 3.40 Å
- Size of the crystallite to axis a direction:: La ≥ 200Å
- Size of the crystallite to axis c direction:: Le ≥ 200Å
- True density:: 2.35 to 2.25 g/cm³
by X-ray diffraction or the like, and prepared by baking an isotropic pitch at a temperature not lower than 2000°C, or carbon fiber.

A dispersing agent and a dispersing medium may be added in the preparation of the composite positive electrode and/or the composite negative electrode to give a uniform dispersion mixture. A thickener, a filler and an adhesion assistant can be also added.

Furthermore, as a positive collector plate, such as material as aluminium, stainless steel, titanium or copper is preferably used, and as a negative collector plate, such as material as stainless steel, iron, nickel or copper is preferably used.

### BRIEF DESCRIPTION OF THE DRAWINGS

Fig. 1 is a sectional view of an example of the sheet cell of the present invention;
Fig. 2 is an outlined view of a test cell for evaluating the characteristics of the galvanic cell of the present invention;
Fig. 3 is a diagram showing the initial discharge characteristics of the sheet cells prepared in Example 10 and Comparative Example 6 when discharged at 25°C and 0.1 mA/cm²;
Fig. 4 is a diagram showing the initial discharge characteristics of the sheet cells prepared in Example 10 and Comparative Example 6 when discharged at 25°C and 0.1 mA/cm² and stored at 60°C for 100 days; and
Fig. 5 is a diagram showing the relationship between the charge-discharge cycle number of sheet cells prepared in Example 11 and Comparative Example & at 25°C and the cell capacities at 25°C.

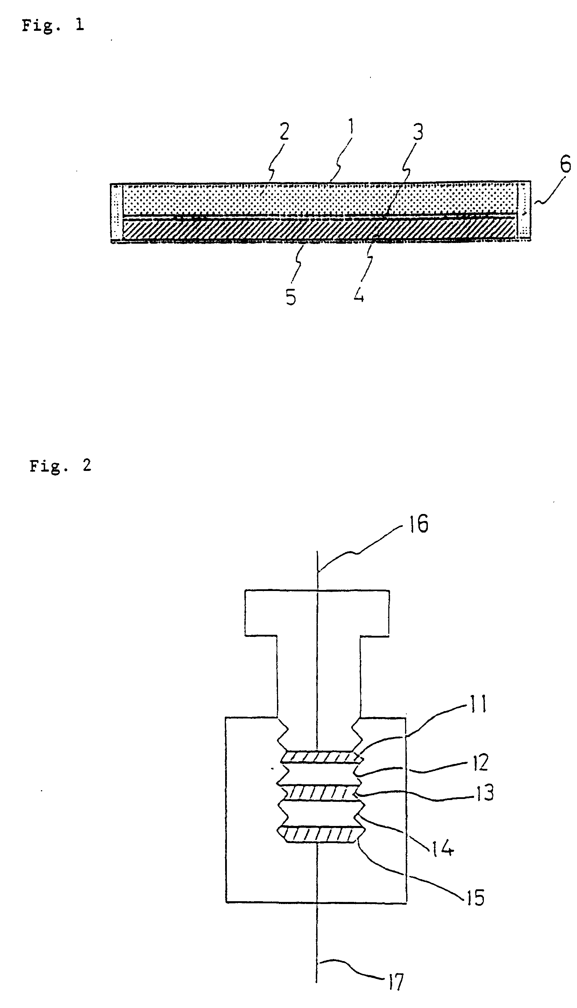

In Fig. 1, a sheet cell comprises a positive collector plate 1, a composite positive electrode 2, a solid electrolyte 3, a negative electrode 4, a negative collector plate 5 and a sealing material 6. In Fig. 2, a test cell comprises a collector 11, a positive electrode 12, a solid electrolyte 13, a negative electrode 14, a collector 15, a lead wire for the positive electrode 16 and a lead wire for the negative electrode 17.

### BEST MODE FOR EMBODYING THE INVENTION

The present invention will be illustrated in more details by Examples and Comparative Examples.

### [Synthetic Examples of terminal acryloyl-modified alkylene oxide polymers]

### Synthetic Example 1 (Compound A-1)

Into a 7ℓ autoclave, 92 g of glycerol (starting material), 9.5 g of potassium hydroxide (catalyst) and 4,700 g of ethylene oxide were fed and were reacted together at 130 °C for 5 hours and then neutralized and desalted to give 610 g of an ethylene oxide polymer. Its molecular weight was 4,270 (calculated from its hydroxyl number).

Into a 2ℓ four-necked flask, 944 g (0.2 mole) of the above ethylene oxide polymer, 65 g (0.9 mole) of acrylic acid, 500 g of toluol and 2 g of concentrated sulphuric acid as catalyst were fed and reacted together under stirring while water was distilled off under reflux for 10 hours. Then the reacted composition was neutralized and desalted, and toluol was distilled off to obtain the desired terminal acryloyl-modified ethylene oxide polymer. Its molecular weight was 4,890 (calculated from GPC).

### Synthetic Example 2 (Compound A-2)

Into a 7ℓ autoclave, 92 g of glycerol, 15.0 g of potassium hydroxide, 3,700 g of ethylene oxide and 1,240 g of propylene oxide were fed and they were reacted together at 115°C for 7 hours and then neutralized and desalted to obtain 4,990 g of an ethylene oxide-propylene oxide random copolymer. Its molecular weight was 5,020 (calculated from its hydroxyl number).

Into a 2ℓ four-necked flask, 1,004 g (0.2 mole) of the above ethylene oxide-propylene oxide random copolymer, 65 g (0.9 mole) of acrylic acid, 500 g of toluol and 3 g of concentrated sulphuric acid as catalyst were fed and reacted together while water was distilled off under reflux for 10 hours. Thus the reacted composition was neutralized and desalted, and toluol was distilled off to obtain the desired terminal acryloyl-modified ethylene oxide-propylene oxide random copolymer. Its molecular weight was 5,180 (calculated from GPC).

### Synthetic Example 3 (Compound A-3)

A terminal acryloyl-modified ethylene oxide-propylene oxide random copolymer having a molecular weight of 7,290 (calculated from GPC) was prepared in the same manner as in Synthetic Example 2 except that the amounts of ethylene oxide and propylene oxide used were varied as shown in Table 1.

### Synthetic Example 4 (Compound A-4)

Into a 20ℓ autoclave, 92 g of glycerol, 46 g of potassium hydroxide, 7,950 g of ethylene oxide and 5,205 g of propylene oxide were fed, reacted together at 115°C for 10 hours, then neutralized and desalted to obtain 13,270 g of an ethylene oxide-propylene oxide random copolymer. Its molecular weight was 13,260 (calculated from its hydroxyl number).

Into a 3ℓ four-necked flask, 1.326 g (0.1 mole) of the above ethylene oxide-propylene oxide random copolymer, 32.5 g (0.45 mole) of acrylic acid, 1000 g of toluol and 10 g of paratoluenesulfonic acid as the catalyst were fed and reacted together under stirring for 12 hours while water was distilled off under reflux. Then the reacted composition was neutralized and desalted, and toluol was distilled off to obtain the desired terminal acryloyl-modified ethylene oxide-propylene oxide random copolymer. Its molecular weight was 13,420 (calculated from GPC).

### Synthetic Example 5 (Compound A-5)

Into a 20ℓ autoclave, 92 g of glycerol, 51 g of potassium hydroxide, 3.980 g of ethylene oxide and 10,500 g of propylene oxide were fed, reacted together at 115°C for 12 hours, and then neutralized and desalted to obtain 14,500 g of an ethylene oxide-propylene oxide random copolymer. Its molecular weight was 14,520 (calculated from its hydroxyl number).

Into a 3ℓ four-necked flask, 1,452 g (0.1 mole) of the above ethylene oxide-propylene oxide random copolymer, 32.5 g (0.45 mole) of acrylic acid, 1000 g of toluol and 10 g of paratoluenesulfonic acid were fed and reacted together under stirring for 10 hours while water was distilled off under refluxing. Then the reacted composition was neutralized and desalted, and toluol was distilled off to obtain the desired terminal acryloyl-modified ethylene oxide-propylene oxide random copolymer. Its molecular weight was 14,680 (calculated from GPC).

### Synthetic Example 6 (Compound A-6)

Into a 30ℓ autoclave, 134 g of trimethylolpropane (starting material), 68 g of potassium hydroxide and 10,600 g of ethylene oxide were fed and reacted together at 140°C for 11 hours. Thus, 8,800 g of propylene oxide was added and the mixture was further reacted together at 110°C for 15 hours, then neutralized and desalted to obtain 19,500 g of an ethylene oxide-propylene oxide block copolymer. Its molecular weight was 19,420 (calculated from its hydroxyl number).

Into a 3ℓ four-necked flask, 1,942 g (0.1 mole) of the above ethylene oxide-propylene oxide block copolymer, 39 g (0.45 mole) of methacrylic acid, 1,200 g of toluol and 20 g of paratoluenesulfonic acid as catalyst were fed and reacted together under stirring for 10 hours while water was distilled off under reflux. Then the reacted composition was neutralized and desalted, and toluol was distilled off to obtain the desired terminal acryloyl-modified ethylene oxide-propylene oxide block copolymer. Its molecular weight was 19,630 (calculated from GPC).

### Synthetic Example 7 (Compound A-7)

A terminal acryloyl-modified propylene oxide polymer having a molecular weight of 8,970 (calculated from GPC) was prepared in the same manner as in Synthetic Example 2 except that propylene oxide was used alone as the alkylene oxide as shown in Table 1.

### Synthetic Example 8 (Compound A-8)

Into a 20ℓ autoclave, 134 g of trimethylolpropane (starting material), 48 g of potassium hydroxide and 11,900 g of butylene oxide were fed and reacted together at 120°C for 18 hours. Then, the mixture was neutralized and desalted to obtain 12,000 g of a butylene oxide polymer. Its molecular weight was 12,030 (calculated from its hydroxyl number).

Into a 3ℓ four-necked flask, 1,203 g (0.1 mole) of the above butylene oxide-propylene oxide block copolymer, 33 g (0.46 mole) of acrylic acid, 1,500 g of toluol and 30 g of paratoluenesulfonic acid as catalyst were fed and reacted together under stirring for 10 hours while water was distilled off under reflux. Then the reacted composition was neutralized and desalted, and toluol was distilled off to obtain the desired terminal acryloyl-modified butylene oxide polymer. Its molecular weight was 12,200 (calculated from GPC).

### Synthetic Example 9 (Compound A-9)

A terminal acryloyl-modified ethylene oxide-butylene oxide random copolymer having a molecular weight of 7,700 (calculated from GPC) was prepared in the same manner as in Synthetic Example 2 except that ethylene oxide and butylene oxide were used as the alkylene oxides as shown in Table 1.

### Synthetic Example 10 (Compound A-10)

Into a 10ℓ autoclave, 92 g of glycerol, 24 g of potassium hydroxide, 6,970 g of propylene oxide and 1,100 g of butylene oxide were fed and reacted together at 110°C for 15 hours. After the reaction has been completed, the mixture was neutralized and desalted to obtain 8,100 g of a propylene oxide-butylene oxide random copolymer. Its molecular weight was 8,145 (calculated from its hydroxyl number).

Into a 3ℓ four-necked flask, 814.5 g (0.1 mole) of the above propylene oxide-butylene oxide random copolymer, 39 g (0.45 mole) of methacrylic acid, 1,000 g of toluol and 5 g of sulphuric acid as catalyst were fed and reacted together under stirring for 10 hours while water was distilled off under reflux. Then the reacted composition was neutralized and desalted, and toluol was distilled off to obtain the desired terminal methacryloyl-modified propylene oxide-butylene oxide random copolymer. Its molecular weight was 8,360 (calculated from GPC).

### Synthetic Example 11 (Compound B-1 : Comparative Example)

Into a 5ℓ autoclave, 92 g of glycerol, 11 g of potassium hydroxide, 2,600 g of ethylene oxide and 870 g of propylene oxide were fed and reacted together at 115°C for 8 hours. Then, the mixture was neutralized and desalted to obtain 3,580 g of an ethylene oxide-propylene oxide random copolymer. Its molecular weight was 3,600 (calculated from its hydroxyl number).

Into a 2ℓ four-necked flask, 720 g (0.2 mole) of the above ethylene oxide-propylene oxide random copolymer, 65 g (0.9 mole) of acrylic acid, 1,000 g of toluol and 5 g of paratoluenesulfonic acid as catalyst were fed and reacted together under stirring for 10 hours while water was distilled off under reflux. Then the reacted composition was neutralized and desalted, and toluol was distilled off to obtain the desired terminal acryloylmodified ethylene oxide-propylene oxide random copolymer. Its molecular weight was 3,760 (calculated from GPC).

### Synthetic Example 12 (Compound B-2 : Comparative Example)

Into a 5ℓ autoclave, 134 g of trimethylolpropane, 5.4 g of potassium hydroxide, 1,320 g of ethylene oxide and 350 g of propylene oxide were fed and reacted together at 115°C for 5 hours. Then, the mixture was neutralized and desalted to obtain 1,790 g of an ethylene oxide-propylene oxide random copolymer. Its molecular weight was 1,800 (calculated from its hydroxyl number).

Into a 3ℓ four-necked flask, 900 g (0.5 mole) of the above ethylene oxide-propylene oxide random copolymer, 162 g (2.25 mole) of acrylic acid, 1,000 g of toluol and 5 g of paratoluenesulfonic acid as catalyst were fed and reacted together under stirring for 10 hours while water was distilled off under reflux. Then the reacted composition was neutralized and desalted, and toluol was distilled off to obtain the desired terminal acryloyl-modified ethylene oxide-propylene oxide random copolymer. Its molecular weight was 1,960 (calculated from GPC).

### Synthetic Example 13 (Compound B-3 : Comparative Example)

Into a 10ℓ autoclave, 92 g of glycerol, 20 g of potassium hydroxide, 1,352 g of ethylene oxide and 4,330 g of butylene oxide were fed and reacted together at 115°C for 11 hours. Then, the mixture was neutralized and desalted to obtain 5,730 g of ethylene oxide-butylene oxide random copolymer. Its molecular weight was 5,740 (calculated from its hydroxyl number).

Into a 2ℓ four-necked flask, 574 g (0.1 mole) of the above ethylene oxide-butylene oxide random copolymer, 39 g (0.45 mole) of methacrylic acid, 1,000 g of toluol and 5 g of sulphuric acid as catalyst were fed and reacted together under stirring for 10 hours while water was distilled off under reflux. Then the reacted composition was neutralized and desalted, and toluol was distilled off to obtain the desired terminal methacryloyl-modified ethylene oxide-butylene oxide random copolymer. Its molecular weight was 5,930 (calculated from GPC).

The constitutions of the terminal acryloyl-modified alkylene oxide polymers prepared in the respective Synthetic Examples are shown in Table 1.

**Table 1**

| Compound | Starting material *¹ | Monomer *² | | | Monomer arrangement*³ | Terminal acryloyl group *⁴ | M.W.*⁵ | |
|---|---|---|---|---|---|---|---|---|
| | | EO | PO | BO | | | ① | ② |
| A-1 | G | 35 | ― | ― | H | A | 4,720 | 4,980 |
| A-2 | G | 28 | 7 | ― | R | A | 5,020 | 5,180 |
| A-3 | G | 40 | 10 | ― | R | A | 7,130 | 7,290 |
| A-4 | G | 60 | 30 | ― | R | A | 13,260 | 13,420 |
| A-5 | G | 30 | 60 | ― | R | A | 14,520 | 1,420 |
| A-6 | T | 80 | 50 | ― | B | M | 19,420 | 19,630 |
| A-7 | G | ― | 50 | ― | H | A | 8,810 | 8,970 |
| A-8 | T | ― | ― | 55 | H | A | 12,030 | 12,200 |
| A-9 | G | 40 | ― | 10 | R | A | 7,540 | 7,700 |
| A-10 | G | ― | 40 | 5 | R | M | 8,145 | 8,360 |
| B-1 | G | 20 | 5 | ― | R | A | 3,600 | 3,760 |
| B-2 | T | 10 | 2 | ― | R | A | 1,800 | 1,960 |
| B-3 | G | 10 | ― | 20 | R | M | 5,740 | 5,930 |

| | | | | | | | | |
|---|---|---|---|---|---|---|---|---|
| Note) * 1- G represents glycerol, and T represents trimethylolpropane. | | | | | | | | |
| * 2- EC represents ethylene oxide, PO represents propylene oxide and BO represents butylene oxide. The figures show the monomer unit number per polyalkylene oxide chain. | | | | | | | | |
| * 3- H represents a homopolymer of an alkylene oxide, R represents a random copolymer and B represents a block copolymer, | | | | | | | | |
| * 4- A represents an acrylate and M represents a methacrylate. | | | | | | | | |
| * 5- Column (1) shows the molecular weight before acryloyl-modification, and Column (2) shows the molecular weight after acryloyl-modification. | | | | | | | | |

### [Synthetic Example of a positive electrode active material]

Into a 1ℓ four-necked flask equipped with a stirrer, a thermometer, a cooling tube and a dropping funnel, 20 g of aniline, 18 ml of hydrochloric acid and 250 ml of water were added. They were cooled to 0°C and then a solution prepared by dissolving 49 g of ammonium sulphate in 120 g of water was dropped from a dropping funnel over 4 hours. Then the mixture was further stirred for 1 hour. The resulting precipitate was filtered and washed with water until the washing becomes neutral and then washed with ethanol until the washing became transparent. the washed product was dried in vacuo to give 10.2 g of dedoped polyaniline. 10 g of the dedoped polyaniline was dissolved in 300 g of N-methyl-2-pyrrolidone and reduced by adding 2 g of phenylhydrazine. After the reaction has been completed, the reaction product was precipitated from acetone and the deposited solid was filtered and washed with acetone and dried to give 8.0 g of grey positive electrode active material (referred to as "reduced polyaniline").

### [Preparative Examples of the Cell]

### Example 1

8 g of reduced polyaniline was used as positive electrode active material. To it, 2 g of a solid electrolyte composition, before crosslinking, comprising 1 part by weight of the terminal acryloyl-modified ethylene oxide polymer (Compound A-1), 4 parts by weight of propylene carbonate and 0.4 part by weight of lithium perchlorate and 2 g of carbon blank (Ketchen Black EC600J) were added, and the mixture was pulverized and mixed well in a ball under a nitrogen atmosphere and then spread on a stainless steel plate 2 µm thick and 12 mm diameter and crosslinked by using electrocurtain electron beam irradiation equipment (Output: 200 KV, Exposure: 5 Mrad) to prepare a positive electrode 30 µm thick. The solid electrolyte composition, before crosslinking, mentioned above was further applied on the positive electrode by a wire coater and crosslinked by using electron beam irradiation equipment in the same manner as mentioned above to form a solid electrolyte layer 50 µm thick.

Then, the above solid electrolyte layer was adhered to a metal lithium tip (50 µm thick, 12 mm diameter) and enclosed in a fluororesin cell shown in Fig. 2 to prepare a lithium cell. As the result of the measurement, the open voltage of the cell was 3.4 V and the discharge capacity was 110 mA · h/g. These characteristics are comparable with the existing lithium cell using a liquid electrolyte.

### Examples 2 to 9 and Comparative Examples 1 and 2

Cells were prepared in the same manner as in Example 1 except that the compositions of the solid electrolyte were varied as shown in Table 2. The characteristics of the resultant cells are shown in Table 2.

**Table 2**

| Sample | Composition of solid electrolyte before crosslinking (g) | | | Initial characteristics | |
|---|---|---|---|---|---|
| | Comoound *¹ | Solvent *² | Electrolyte salt | Open voltage ( V ) | Discharge capacity ( mA · h/g ) |
| Examples | | | | | |
| 2 | A-2 (1) | PC (6) | LiClO₄ (1.1) | 3.5 | 120 |
| 3 | A-3 (1) | PC/DME(2/4) | LiBF₄ (2.0) | 3.6 | 125 |
| 4 | A-4 (1) | GBL (9) | LiSCN (0.9) | 3.4 | 120 |
| 5 | A-5 (1) | PC (2.5) | LiClO₄(0.2) | 3.3 | 121 |
| 6 | A-6 (1) | PC (9.5) | LiCF₃SO₃(2.1) | 3.4 | 130 |
| 7 | A-7 (1) | EC (5) | LiClO₄(0.5) | 3.5 | 124 |
| 8 | A-8 (1) | SL (2.5) | LiClO₄(0.2) | 3.1 | 122 |
| 9 | A-9 (1) | EC (4) | LiClO₄(0.6) | 3.5 | 124 |

| Comparative Example | | | | | |
|---|---|---|---|---|---|
| 1 | A-1 (1) | PC (1) | LiClO₄(0.1) | 3.0 | 40 |
| 2 | A-2 (1) | PC (2) | LiClO₄(0.1) | 3.1 | 38 |

| | | | | | |
|---|---|---|---|---|---|
| Note) * 1- Same as in Table 1. | | | | | |
| * 2- PC represents propylene carbonate, DME represents dimethoxyethane, GBL represents τ-butyrolactone, EC represents ethylene carbonate and SL represents solfolane. | | | | | |

### Comparative Example 3

An attempt was made to prepare a positive electrode in the same manner as in Example 1 except that Compound B-1 was used instead of Compound A-1. However, the compound could not be completely crosslinked. Crosslinking was attempted using the solid electrolyte composition before crosslinking alone, but the resulting composition was not a solid electrolyte and no cell could be prepared from it.

### Comparative Example 4

An attempt was made to prepare a positive electrode in the same manner as in Example 1 except that Compound B2 was used instead of Compound A-1 and the amount of propylene carbonate used was 3 parts by weight. The same result as in Comparative Example 3 was obtained.

### Comparative Example 5

An attempt was made to prepare a cell in the same manner as in Example 1 except that Compound B-3 was used instead of Compound A-1 and the amount of propylene carbonate used was 3 parts by weight. However, liquid leakage from the cell was observed and no cell of practical utility could be prepared.

### Example 10

A sheet cell of the present invention was prepared according to a procedure consisting of the following steps a) to c).
a) A mixture X of manganese dioxide (positive electrode active material) and acetylene black (conductor) in a ratio of 85:15 (by weight) and a mixture Y of Compound A-3, lithium perchlorate, propylene carbonate and azobisisobutyronitrile in a ratio of 10:1:25:0.05 (by weight) were prepared. The mixtures were mixed together under dry inert gas atmosphere in a ratio of 10:3 (by weight).
   Then, this mixture was cast-coated on a collector prepared by forming a conductive carbon film on the surface of a positive collector plate comprising stainless steel and cured by being stood at 100°C for 1 hour to obtain a composite positive electrode. The thickness of the composite positive electrode film formed on the positive collector plate was 60 *µ*m
b) Lithium metal was used as the negative electrode active material and it was pressed onto a negative collector plate consisting of stainless steel.
   Then, on the lithium metal, a mixture of Compound A-3, lithium perchlorate, propylene carbonate and azobisisobutyronitrile in a ratio of 30:3:150:0.5 (by weight) was cast-coated and cured by being stood at 100°C for 1 hour under a dry inert gas atmosphere. The thickness of the solid electrolyte thus prepared was 20 *µ*m.
c) The solid electrolyte/lithium/negative collector plate prepared in step b) was contacted with the positive collector plate/composite positive electrode prepared in step a) to give a sheet cell as shown in Fig. 1.

In Fig. 1, the sheer cell comprises a positive collector plate 1 consisting of stainless steel which also serves as a housing, a composite electrode 2 comprising the solid electrolyte of the present invention, the solid electrolyte 3 of the present invention, a negative electrode 4 consisting of lithium metal, negative collector plate 5 consisting of stainless steel (which also serves as a housing), and a sealing material 6 consisting of a modified polypropylene.

### Comparative Example 6

A sheet cell was prepared in the same manner as in Example 10 except that polyethylene glycol triacrylate was used instead of Compound A-1.

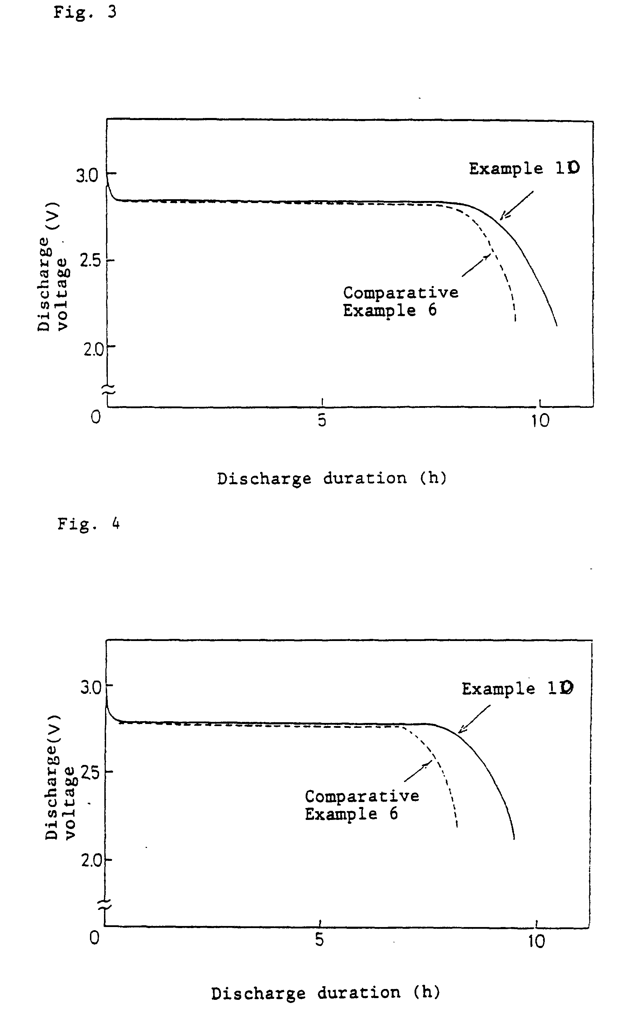

The sheet cells prepared in Example 10 and Comparative Example 6 had an electrode area of 100 cm². The initial discharge characteristics when these sheet cells were discharged at 25°C and 0.1 mA/cm² and the discharge characteristics after storage at 60°C for 100 days were examined. Fig. 3 shows the discharge characteristics immediately after preparation of the cells (initial discharge characteristics). Fig. 4 shows the discharge characteristics after storage at 60°C for 100 days.

As apparent from the results of Figs. 3 and 4, the sheet cell of Example 10 of the present invention has excellent initial discharge characteristics and discharge characteristics after storage at 60°C for 100 days as compared with the sheet cell of Comparative Example 6.

### Example 11

A sheet cell was prepared according to the following procedure.
a) A mixture of vanadium pentoxide (positive electrode active material) and acetylene black (conductor) in a ratio of 85:15 (by weight) and a mixture Y of Compound A-4, lithium hexafluoroarsenate, ethylene carbonate and 2-methyltetrahydrofuran in a ratio of 10:1:10:30 (by weight) were prepared and these mixtures were mixed together in a ratio of 10:3 under a dry inert gas atmosphere.
   Then, the resultant mixture was cast-coated on a collector prepared by forming a conductive carbon film on the surface of a positive collector plate and then cured by being stood at 100°C for 1 hour under a dry inert gas atmosphere. The thickness of the composite positive electrode film formed on the positive collector plate was 60*µ*m.
b) Lithium metal was used as the negative electrode active material of the cell and it was pressed onto a negative collector plate consisting of stainless steel.
   Then, on the lithium metal, a mixture of Compound A-4, lithium hexafluoroarsenate, ethylene carbonate and 2-methyltetrahydrofuran in a ratio of 30:6:30:60 (by weight) was cast-coated and cured by being stood at 100°C for 1 hour under a dry inert gas atmosphere. The thickness of the solid electrolyte thus prepared was 20*µ*m.
c) A sheet cell similar to that in Example 10 was prepared by contacting the solid electrolyte/lithium/negative collector plate prepared in step b) with the positive collector plate/composite positive electrode prepared in step a).

### Comparative Example 7

A sheet cell was prepared in the same manner as in Example 11 except that polyethylene glycol triacrylate was used instead of Compound A-2.

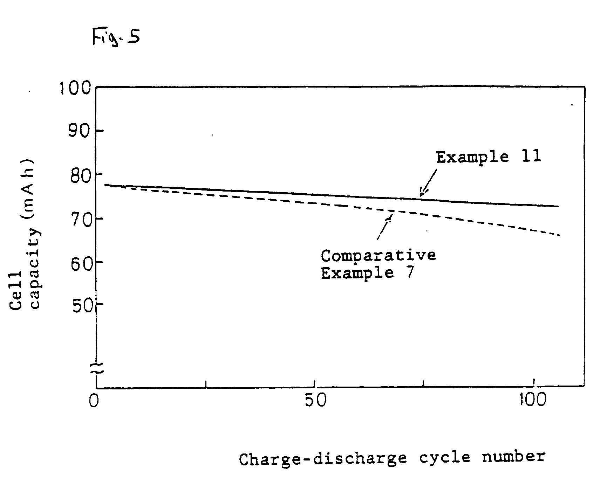

The sheet cell prepared in Example 11 and Comparative Example 7 had an electrode area of 100 cm². Using the sheet cells, a charge and discharge cycle test at a constant current was carried out at 25°C and 50 *µ*A/cm². The charge and discharge cycle test was carried out at a charge terminal voltage of 3.2 V and a discharge terminal voltage of 2.0 V. Fig. 5 shows the relationship between the charge and discharge cycle member and the capacities of the cells.

As apparent from the result of Fig. 5, the sheet cell of Example 11 of the present invention shows excellent charge and discharge cycle characteristics compared to the sheet cell of Comparative Example 7.

### INDUSTRIAL APPLICABILITY OF THE INVENTION

The cell of the present invention does not show liquid leakage, which is feared when a liquid electrolyte is used, and has a high electric capacity and an excellent mechanical strength and therefore can be used with high reliability as a back-up power source for electronic equipment, a watch power source, a camera power source and a place-maker power source.

In the present invention, an electrode of very high performance can be prepared by unifying a special solid electrolyte composition with the positive electrode active material to form a composite positive electrode for use as mentioned above, as it increases the actual surface area of the active material contacting with the electrolyte layer (separator) and the collector. Also the formation of lithium dendrite is prevented by using the solid electrolyte also as the electrolyte layer (separator) to give an electrolyte layer (separator) excellent in mechanical strength and thermally and electrochemically stable. Therefore, a composite electrode and an electrolyte most suitable electrochemically can be prepared and it not only improves the workability of the cell manufacturing process but also can improve the performance of the cell.

## Claims

1. A galvanic cell comprising a composite positive electrode and a negative electrode separated by a solid electrolyte, **characterised in that**:
the solid electrolyte is prepared by dissolving a polymer in a solvent together with an electrolyte salt and crosslinking the polymer in the solution by irradiation and/or by heating to yield the polymer in solidified form and containing the electrolyte salt and the solvent;
said polymer is a terminal acryloyl-modified alkylene oxide polymer of the following formula: 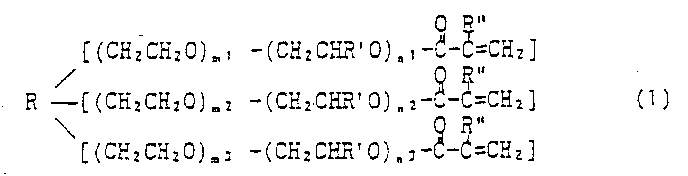 in which R is glycerol or trimethylolpropane residue, R' is an alkyl group having 1 to 6 carbon atoms, R" is hydrogen or methyl group, and m¹, m², m³, n¹, n², and n³ are respectively 0 or an integer equal to at least 1 and the value of each of (m¹ + n¹), (m² + n²) and (n³ + n³) ≥ 35, the solvent is selected from ethylene carbonate, propylene carbonate, τ-butyrolactone, dimethoxyethane, dimetholsulfoxide, dioxolane, sulfolane and water, and the amount of said solvent is 220 to 950 weight % based on said terminal acryloyl-modified alkylene oxide polymer; and the composite positive electrode is prepared by mixing a terminal acryloyl-modified alkylene oxide polymer in accordance with Formula (1), an electrolyte salt, a solvent selected from ethylene carbonate, propylene carbonate, γ-butyrolactone, and water and a positive electrode active material and crosslinking the polymer in the mixture by irradiation and/or heating to yield the polymer in solidified form and containing the electrolyte salt and the solvent.

2. A galvanic cell according to Claim 1, in which a conductive material is comprised in said composite positive electrode.

3. A galvanic cell according to Claim 1 or 2, in which said negative electrode is a composite electrode containing a solid electrolyte prepared by mixing a terminal acryloyl-modified alkylene oxide polymer in accordance with Formula (1), an electrolyte salt and a solvent and crosslinking the polymer in the mixture by irradiation and/or by heating to yield the polymer in solidified form and containing the electrolyte salt and the solvent.

4. A galvanic cell according to claim 3, in which a conductive material is comprised in said composite negative electrode.

5. A galvanic cell according to any preceding claim, in which said electrolyte salt is at least one salt selected from lithium fluoride, lithium chloride, lithium bromide, lithium iodide, lithium nitrate, lithium thiocyanate, lithium perchlorate, lithium trifluoromethanesulfonate, lithium tetrafluoroborate, lithium bistrifluoromethylsulfonylamide, lithium tristrifluoromethylsulfonylmethide, sodium thiocyanate, sodium perchlorate, sodium trifluoromethanesulfonate, sodium tetrafluoroborate, potassium thiocyanate, potassium perchlorate, potassium trifluoromethanesulfonate, potassium tetrafluoroborate, magnesium thiocyanate, magnesium perchlorate and magnesium trifluoromethane-sulfonate.

6. A galvanic cell according to any preceding claim, in which said electrolyte salt is used in a ratio of 1 to 35 weight % based on said solvent.

## Patentansprüche

1. Galvanische Zelle mit einer positiven Verbundelektrode und einer negativen Elektrode, die durch einen Festelektrolyten getrennt sind, **dadurch gekennzeichnet, daß**:
der Festelektrolyt hergestellt wird, indem man ein Polymer zusammen mit einem Elektrolytsalz in einem Lösungsmittel löst und das Polymer in der Lösung durch Bestrahlung und/oder Erhitzen vernetzt, wobei man das Polymer in verfestigter, das Elektrolytsalz und das Lösungsmittel enthaltender Form erhält;
es sich bei dem Polymer um ein endständig acryloylmodifiziertes Alkylenoxidpolymer der folgenden Formel: 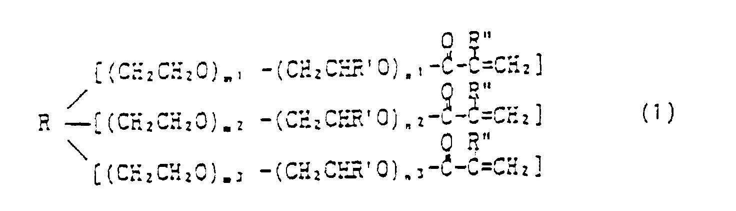 worin R für einen Glycerin- oder Trimethylolpropanrest steht, R' für eine Alkylgruppe mit 1 bis 6 Kohlenstoffatomen steht, R" für Wasserstoff oder eine Methylgruppe steht und m¹, m², m³, n¹, n² und n³ für 0 oder eine ganze Zahl von mindestens 1 stehen und der Wert von (m¹ + n¹), (m² + n²) und (m³ + n³) jeweils ≥ 35 ist, handelt, das Lösungsmittel unter Ethylencarbonat, Propylencarbonat, τ-Butyrolacton, Dimethoxyethan, Dimethylsulfoxid, Dioxolan, Sulfolan und Wasser ausgewählt ist und die Menge des Lösungsmittels 220 bis 950 Gew.-%, bezogen auf das endständig acryloylmodifizierte Alkylenoxidpolymer, beträgt;
und die positive Verbundelektrode dadurch hergestellt wird, daß man ein endständig acryloylmodifiziertes Alkylenoxidpolymer der Formel (1), ein Elektrolytsalz, ein unter Ethylencarbonat, Propylencarbonat, γ-Butyrolacton und Wasser ausgewähltes Lösungsmittel und eine Aktivmasse für die positive Elektrode vermischt und das Polymer in der Mischung durch Bestrahlung und/oder Erhitzen vernetzt, wobei man das Polymer in verfestigter, das Elektrolytsalz und das Lösungsmittel enthaltender Form erhält.

2. Galvanische Zelle nach Anspruch 1, bei der in der positiven Verbundelektrode ein leitfähiges Material enthalten ist.

3. Galvanische Zelle nach Anspruch 1 oder 2, bei der es sich bei der negativen Elektrode um eine Verbundelektrode mit einem Festelektrolyten handelt, welcher hergestellt wird, indem man ein endständig acryloylmodifiziertes Alkylenoxidpolymer gemäß Formel (1), ein Elektrolytsalz und ein Lösungsmittel vermischt und das Polymer in der Mischung durch Bestrahlung und/oder Erhitzen vernetzt, wobei man das Polymer in verfestigter, das Elektrolytsalz und das Lösungsmittel enthaltender Form erhält.

4. Galvanische Zelle nach Anspruch 3, bei der in der negativen Verbundelektrode ein leitfähiges Material enthalten ist.

5. Galvanische Zelle nach einem der vorhergehenden Ansprüche, bei der es sich bei dem Elektrolytsalz um mindestens ein unter Lithiumfluorid, Lithiumchlorid, Lithiumbromid, Lithiumiodid, Lithiumnitrat, Lithiumthiocyanat, Lithiumperchlorat, Lithiumtrifluormethansulfonat, Lithiumtetrafluoroborat, Lithiumbistrifluormethylsulfonylamid, Lithiumtristrifluormethylsulfonylmethid, Natriumthiocyanat, Natriumperchlorat, Natriumtrifluormethansulfonat, Natriumtetrafluoroborat, Kaliumthiocyanat, Kaliumperchlorat, Kaliumtrifluormethansulfonat, Kaliumtetrafluoroborat, Magnesiumthiocyanat, Magnesiumperchlorat und Magnesiumtrifluormethansulfonat ausgewähltes Salz handelt.

6. Galvanische Zelle nach einem der vorhergehenden Ansprüche, bei der das Elektrolytsalz in einem Verhältnis von 1 bis 35 Gew.-%, bezogen auf das Lösungsmittel, eingesetzt wird.

## Revendications

1. Cellule galvanique comprenant une électrode positive composite et une électrode négative séparées par un électrolyte solide, **caractérisée en ce que**:
l'électrolyte solide est préparé par dissolution d'un polymère dans un solvant avec un sel d'électrolyte et par réticulation du polymère dans la solution par irradiation et/ou chauffage pour donner le polymère sous forme solidifiée contenant le sel d'électrolyte et le solvant;
ledit polymère est un polymère d'oxyde d'alkylène modifié en bout de chaîne par des groupes acryloyle, de formule suivante: 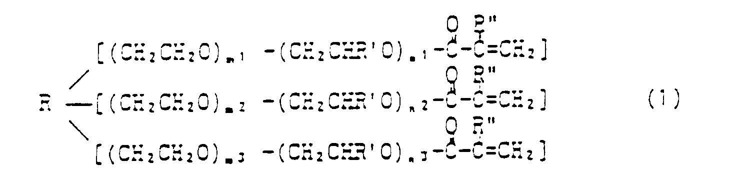 dans laquelle R est un résidu glycérol ou triméthylolpropane, R' est un groupe alkyle comportant 1 à 6 atomes de carbone, R" est un atome d'hydrogène ou un groupe méthyle, et m¹, m², m³, n¹, n² et n³ sont respectivement nuls ou des nombres entiers au moins égaux à 1, et la valeur de chacune des expressions (m¹ + n¹), (m² + n²) et (m³ + n³) ≥ 35, le solvant est choisi parmi le carbonate d'éthylène, le carbonate de propylène, la τ-butyrolactone, le diméthoxyéthane, le diméthylsulfoxyde, le dioxolane, le sulfolane et l'eau, et la quantité dudit solvant est de 220 à 950% en poids, rapportée audit polymère d'oxyde d'alkylène modifié en bout de chaîne par des groupes acryloyle; et l'électrode positive composite est préparée par mélange d'un polymère d'oxyde d'alkylène modifié en bout de chaîne par des groupes acryloyle conforme à la formule (1), d'un sel d'électrolyte, d'un solvant choisi parmi le carbonate d'éthylène, le carbonate de propylène, la γ-butyrolactone et l'eau et d'une matière active en tant qu'électrode positive, et réticulation du polymère dans le mélange par irradiation et/ou chauffage pour donner le polymère sous forme solidifiée contenant le sel d'électrolyte et le solvant.

2. Cellule galvanique selon la revendication 1, dans laquelle une matière conductrice est comprise dans ladite électrode positive composite.

3. Cellule galvanique selon la revendication 1 ou 2, dans laquelle ladite électrode négative est une électrode composite contenant un électrolyte solide préparé par mélange d'un polymère d'oxyde d'alkylène modifié en bout de chaîne par des groupes acryloyle conforme à la formule (1), d'un sel d'électrolyte et d'un solvant, et réticulation du polymère dans le mélange par irradiation et/ou chauffage pour donner le polymère sous forme solidifiée contenant le sel d'électrolyte et le solvant.

4. Cellule galvanique selon la revendication 3, dans laquelle une matière conductrice est comprise dans ladite électrode négative composite.

5. Cellule galvanique selon l'une quelconque des revendications précédentes, dans laquelle ledit sel d'électrolyte est au moins un sel choisi parmi le fluorure de lithium, le chlorure de lithium, le bromure de lithium, l'iodure de lithium, le nitrate de lithium, le thiocyanate de lithium, le perchlorate de lithium, le trifluorométhanesulfonate de lithium, le tétrafluoroborate de lithium, le bistrifluorométhylsulfonylamide de lithium, le tristrifluorométhylsulfonylméthide de lithium, le thiocyanate de sodium, le perchlorate de sodium, le trifluorométhanesulfonate de sodium, le tétrafluoroborate de sodium, le thiocyanate de potassium, le perchlorate de potassium, le trifluorométhanesulfonate de potassium, le tétrafluoroborate de potassium, le thiocyanate de magnésium, le perchlorate de magnésium et le trifluorométhanesulfonate de magnésium.

6. Cellule galvanique selon l'une quelconque des revendications précédentes, dans laquelle ledit sel d'électrolyte est utilisé dans un rapport de 1 à 35% en poids par rapport audit solvant.
